# EUROPÄISCHE PATENTSCHRIFT

(11) **EP 2 426 869 B1**
(45) Veröffentlichungstag und Bekanntmachung des Hinweises auf die Patenterteilung: **02.05.2018**
(21) Anmeldenummer: 11004428.6
(22) Anmeldetag: 31.05.2011
(51) Int. Cl.: H04L 29/12, G01S 15/93, H04L 12/40, H04L 29/08

(54) **Sensorsystem für ein Fahrzeug und Verfahren zum Parametrieren des Sensorsystems**
Sensor system for a vehicle and method for setting parameters for the sensor system
Système de détection pour un véhicule et procédé de paramétrage du système de détection

(30) Priorität: 03.09.2010 DE 102010044361
(43) Veröffentlichungstag der Anmeldung: 07.03.2012
(73) Patentinhaber: WABCO GmbH, 30453 Hannover (DE)
(72) Erfinder: Lücking, Christoph, 30459 Hannover (DE); Risse, Rainer, 30982 Pattensen-Reden (DE); Ronnenberg, Udo, 30900 Wedemark (DE); Stender, Axel, 31787 Hameln (DE)
(74) Vertreter: Koschnitzki, Thomas

(56) Entgegenhaltungen:
- EP-A1- 2 101 190
- DE-B3-102005 034 944

## Beschreibung

Die Erfindung betrifft ein Sensorsystem für ein Fahrzeug, das insbesondere ein Umfeld-Überwachungssystem eines Nutzfahrzeugs sein kann, sowie ein Verfahren zum Parametrieren des Sensorsystems.

Ein derartiges Sensorsystem weist mehrere Sensoren auf, die z. B. Entfernungen bzw. Abstände zu Objekten in dem Umfeld detektieren, z. B. als Rückraum-Überwachungssystem für ein Nutzfahrzeug. Grundsätzlich ist die Erfindung jedoch auf sämtliche Anwendungen von Bus-Systemen mit Sensoren anwendbar, die in dem Bus-System durch Bus-Adressen identifiziert sind. Als mehrere Sensoren werden mindestens zwei, vorzugsweise jedoch drei oder mehr Sensoren bezeichnet.

Die Vergabe der Bus-Adressen wird auch als Parametrierung der angeschlossenen Sensoren bezeichnet. Durch die Bus-Adressen können die über den Bus übertragenen Sensor-Signale nachfolgend den einzelnen Sensoren zugeordnet werden, um die gewünschte Auswertung durchzuführen, z. B. für eine Rückraum-Überwachung.

Rückraum-Überwachungssysteme weisen z. B. bis zu sechs Sensoren auf. Grundsätzlich können für die verschiedenen Positionen am Fahrzeug unterschiedliche Sensoren eingesetzt werden. Durch unterschiedliche Sensoren treten jedoch höhere Herstellungskosten und ein höherer Logistikaufwand auf.

Daher werden z. T. identische oder baugleiche Sensoren eingesetzt. Erfindungsgemäß werden Sensoren als baugleich bezeichnet, wenn ihre Hardware und Software - zumindest in den funktionell relevanten Teilen - gleich ist, d. h. insbesondere ihre sensitiven Elemente und ihre Bus-Anschlusseinrichtungen sowie die gespeicherte Software identisch sind. Diese baugleichen Sensoren können unterschiedlich parametriert werden, d. h. unterschiedliche Bus-Adressen speichern, um sich entsprechend zu identifizieren. Somit weisen die baugleichen Sensoren unterschiedliche gespeicherte Parameter auf. Die baugleichen Sensoren sind somit nicht mehr identisch; es muss eine eigene Teilenummer für jeden Sensor vorgehalten werden, wobei es leicht zu Verwechslungen und somit fehlerhaften Installationen kommen kann.

Um baugleiche Sensoren zu verwenden, ist es bekannt, diese bereits vorparametriert am Fahrzeug zu montieren. Dies ist jedoch relativ aufwendig, insbesondere bezüglich des Logistikaufwandes, und fehlerträchtig.

Weiterhin ist bekannt, in den Sensoren Hardware-Lösungen vorzusehen. Die Sensoren verfügen über einen Bus-Eingang und einen Bus-Ausgang und sind seriell mit dem Master verbunden. Zunächst lässt sich vom Master aus somit nur der erste Teilnehmer ansprechen. Nachdem dieser parametriert worden ist, verbindet er seinen Eingang mit seinem Ausgang und ermöglicht somit die Adressierung des nächsten Sensors durch den Master. Hierdurch ist jedoch ein höherer Hardware-Aufwand in den Sensoren erforderlich. Das Dokument EP 2 101 190 A1 offenbart ein Verfahren zum Adressieren einer Mehrzahl von Sende- und Empfangseinheiten einer Ultraschallabstandsmesseinrichtung, wobei jeder der Sende- und Empfangseinheiten eine eindeutige Adresse zugewiesen wird, und zwar auf Grundlage einer Veränderung einer Sende- und/oder Empfangseigenschaft jeweils einer der Sende- und Empfangseinheiten durch zeitversetztes Manipulieren einer Komponente der jeweiligen Sende- und Empfangseinheiten. Der Erfindung liegt die Aufgabe zugrunde, mit relativ geringem Aufwand und geringen Kosten eine eindeutige Parametrierung der Sensoren in einem Sensorsystem zu ermöglichen.

Diese Aufgabe wir durch ein Verfahren nach Anspruch 1 gelöst. Die Unteransprüche beschreiben bevorzugte Weiterbildungen.

Es ist somit vorgesehen, dass die mehreren Sensoren durch den Bus-Master mittels eines bedingten Adressierkommandos parametrierbar sind, wobei die Bedingung sich auf den Eintritt eines äußeren Einflusses, d.h. einer äußeren Einwirkung bezieht. Dieser äußere Einfluss kann insbesondere die Messung oder Messfähigkeit der Sensoren betreffen.

Gemäß einer bevorzugten Ausbildung erzeugt der äußere Einfluss einen Fehler bzw. Fehlerzustand des Sensors. Somit kann der Sensor eindeutig erkennen, dass der momentan einwirkende äußere Einfluss spezifisch zur Parametrierung dient. Bei Ultraschall-Entfernungs-Sensoren kann dies z. B. durch Bedecken der aktiven Sensormembran des Sensors erfolgen, was eindeutig als Fehler, insbesondere Transducer-Fehler erkannt wird, wenn das Senden und/oder Empfangen des Sensors beeinträchtigt ist. Unter einem Bedecken eines Sensors wird somit das Einführen eines Gegenstandes, z. B. der Hand des Benutzers, vor diesen Sensor bzw. vor dessen sensitives Element (z. B. Transducer) in einem Abstand unterhalb eines zulässigen Mindestabstandes verstanden. Das Bedecken erfolgt somit selektiv für genau den zu adressierenden Sensor.

Statt eines Bedeckens kann grundsätzlich aber auch ein anderes Ereignis generiert werden, der sich mit geringem Aufwand und auf einen Sensor beschränkt herbeiführen lässt. Weiterhin sind grundsätzlich auch andere äußere Einflüsse als Bedingung für die Parametrierung denkbar, z. B. Messungen eines Abstandes eines Objektes in einem spezifischen Abstand bzw. Abstandsbereich.

Es ergeben sich einige Vorteile. So können sämtliche Sensoren des Bus-Systems zunächst auf eine einheitliche Basisadresse zurückgesetzt werden oder in einem Auslieferungszustand mit dieser Basisadresse direkt in das Bus-System eingebaut werden. Der Bus-Master kann nachfolgend Adressierungen vornehmen, die er mit der Bedingung des Eintritts des äußeren Einflusses verbindet. Indem der Benutzer diesen äußeren Einfluss jeweils nur an dem relevanten Sensor herbeiführt, kann er sukzessive mit relativ geringem Aufwand die Adressierung der Sensoren bewirken, ohne in die bestehende Bustopologie einzugreifen (z. B. durch Unterbrechung bestimmter Leitungspfade). Insbesondere kann der Adressierungs-Vorgang als Routine vom Bus-Master durchgeführt werden, der mittels der bedingten Adressierkommandos sukzessive die einzelnen Adressen vergibt.

Somit kann z. B. eine an den Bus-Master angeschlossene Recheneinrichtung den Benutzer auffordern, jeweils den spezifisch zu adressierenden Sensor zu beeinflussen, d. h. z. B. mit der Hand abzudecken, sodass der Sensor dann selbsttätig den Eintritt der Bedingung erkennt und somit das bedingte Adressierkommando aufnimmt und zu seiner eigenen Adressierung verwendet. Der Benutzer muss somit während der Parametrierung nicht die Recheneinrichtung oder den Bus-Master bedienen, sondern nur die Sensoren bedecken.

Der Befehlssatz des Bus-Systems kann relativ einfach gehalten werden; so sind an Kommandos zunächst das bedingte Adressierkommando vorzusehen, vorteilhafterweise ergänzend ein Status-Anfrage-Kommando, mit dem der Bus-Master eine Bus-Adresse abfragt und der adressierte Sensor sich hierauf meldet und somit seine Parametrierung bestätigt.

Weiterhin ist vorteilhafterweise vorgesehen, dass der Bus-Master die einzelnen Bus-Adressen auch ohne die Bedingung adressieren kann, um zunächst sämtliche Adressen sukzessive auf die Basisadresse zu setzen, sodass nachfolgend die bedingte Adressierung erfolgen kann. Grundsätzlich ist jedoch dieses Zurücksetzen der Bus-Adressen nicht erforderlich; da der Eintritt der Bedingung von jedem Sensor auch bei bereits vergebener Adresse detektiert werden kann, kann der Bus-Master die Adressen auch sukzessive durch bedingte Adressierkommandos ohne vorheriges Zurücksetzen auf die Basisadressen vergeben.

Gemäß einer besonders bevorzugten Ausbildung sind die Sensoren baugleich ausgebildet, d.h. mit - bzgl. der funktionellen Teile - gleicher Hardware und gleicher Software bzw. gleichen gespeicherten Programmen. Somit speichern die baugleichen Sensoren die unterschiedlichen Parameter, d.h. insbesondere unterschiedlichen Bus-Adressen. Die gespeicherten Parameter werden erfindungsgemäß somit nicht als Teil der Software aufgefasst.

Hierdurch ergeben sich weitere Vorteile. So können die Sensoren kostengünstig hergestellt werden. Weiterhin können die Sensoren identisch ausgeliefert werden, ohne dass bei dem Vertrieb und der Lagerung spezifische Produktnummern bzw. Teilenummern vorzuhalten sind. Somit können Herstellungskosten gesenkt und die Logistik deutlich vereinfacht werden. Weiterhin kann bei Defekten schneller ein Ersatz durchgeführt werden, indem ein jeweils defekter Sensor durch einen (einheitlichen) Ersatz-Sensor ersetzt wird. Nach einem derartigen Austausch kann dann nachfolgend wiederum die erfindungsgemäße Parametrierung durchgeführt werden.

Somit ergibt sich gegenüber herkömmlichen Lösungen mit hardwaremäßig unterschiedlich ausgebildeten Sensoren eine Kostenersparnis, weiterhin eine Zeitersparnis gegenüber einer Parametrierung direkt bei der Montage, und eine Kostenersparnis gegenüber der Vermarktung von vorparametrierten, ansonsten identischen Sensoren mit separaten Teilenummern.

Die Erfindung wird im Folgenden anhand der beiliegenden Zeichnungen an einigen Ausführungsformen erläutert. Es zeigen:
- Fig. 1: ein Fahrzeug mit einem Sensorsystem gemäß einer Ausführungsform in schematisierter Darstellung der relevanten Teile;
- Fig. 2: einen Sensor des Sensorsystems; und
- Fig. 3: ein Flussdiagramm eines erfindungsgemäßen Verfahrens.

Ein Fahrzeug 1 ist vorzugsweise ein Nutzfahrzeug, z. B. ein LKW. Am hinteren Bereich des Fahrzeugs 1 ist ein erfindungsgemäßes Rückraum-Überwachungssystem 2 als Sensorsystem zur Überwachung des Rückraums 4 hinter dem Fahrzeug 1 vorgesehen. Das Rückraum-Überwachungssystem 2 weist vier Entfernungs-Sensoren 3-1, 3-2, 3-3 und 3-4 sowie einen Bus-Master 6 auf, die über einen LIN-Bus 7 miteinander zu einem LIN-Bus-System zusammengefasst sind. Somit bildet das erfindungsgemäße Rückraum-Überwachungssystem 2 ein LIN-Bus-System 2. An dieses Bus-System können weitere Knoten bzw. Slaves angeschlossen sein, z. B. weitere Entfernungs-Sensoren, oder auch z. B. andere Sensoren oder Leuchten. Die Entfernungs-Sensoren 3-i mit i = 1, 2, 3, 4 können insbesondere Ultraschall-Sensoren oder auch Radar -Sensoren sein. Die Entfernungs-Sensoren 3-i sind baugleich mit - bezüglich der relevanten Teile - identischer Hardware und Software ausgebildet und können durch den Bus-Master 6 unterschiedlich parametriert werden, d. h. es können ihnen unterschiedliche Bus-Adressen im LIN-Bus-System 2 zugeordnet werden.

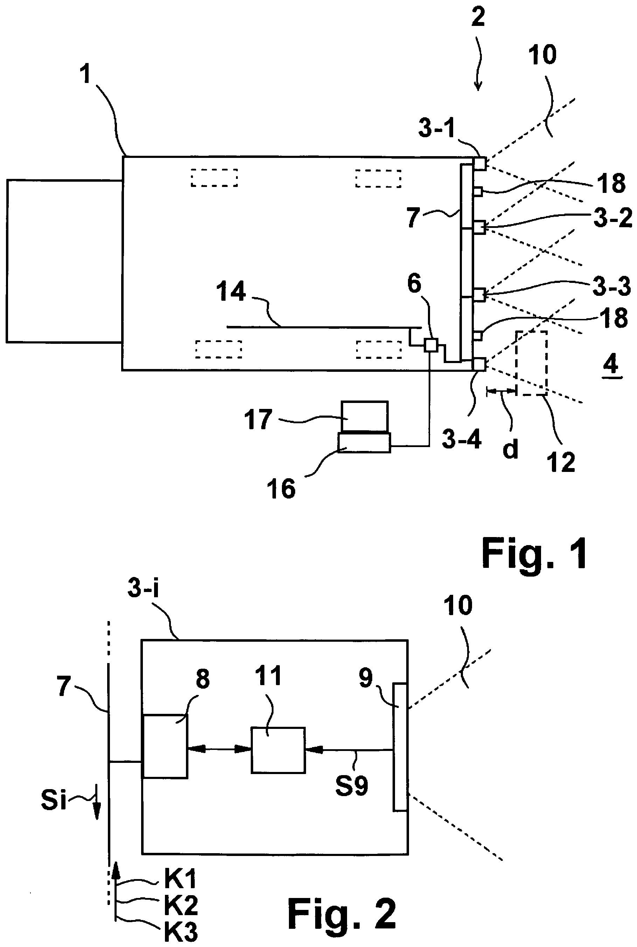

In Fig. 2 ist einer der Entfernungs-Sensoren 3-i für i = 1, 2, 3, 4 in schematisierter Darstellung detaillierter gezeigt. Der Entfernungs-Sensor 3-i weist eine Bus- Anschlusseinrichtung 8 für den LIN-Bus 7 auf. In üblicher Weise werden die mehreren Entfernungs-Sensoren 3-i als LIN-Knoten mit ihren Bus-Anschlusseinrichtungen 8 an den als Eindraht-Bus ausgebildeten LIN-Bus 7 parallel geschaltet, um logisch gemäß Fig. 1 eine Bus-Architektur auszubilden. Jeder Entfernungs-Sensor 3-i weist mindestens ein sensitives Element 9 auf, bei Ultraschall-Sensoren somit einen Transducer mit einer Sensormembran 9, um innerhalb eines Erfassungsbereichs 10 (Erfassungswinkels) den Abstand d zu Objekten 12 zu detektieren.

Die Entfernungs-Sensoren 3-i geben jeweils Messsignale Si, mit i = 1bis 4, d. h. S1, S2, S3, S4 auf den LIN-Bus 7 aus, die vorzugsweise von dem Bus-Master 6 aufgenommen und ausgewertet werden. Der Bus-Master 6 kann diese Signale oder hieraus gebildete Signale wiederum z. B. über den fahrzeuginternen CAN-Bus 14 weitergeben.

Weiterhin weist jeder Entfernungs-Sensor 3-i eine Steuereinrichtung 11 auf, die die analogen Signale S9 des sensitiven Elementes 9 aufnimmt und die Bus-Anschlusseinrichtung 8 ansteuert. Dieser innere Aufbau ist als solches bei Ultraschall-Sensoren mit Bus-Anschlüssen üblich und wird daher nicht detaillierter erläutert.

Die Entfernungs-Sensoren 3-i verfügen über die Möglichkeit, einen Mess- bzw. Transducer-Fehler zu erkennen, wenn das Senden und Empfangen beeinträchtigt ist. Dieser Fehlerzustand lässt sich künstlich herbeiführen, in dem der Benutzer die Sensormembran 9 mit einem Gegenstand 12, z. B. seiner Hand abdeckt oder einen Mindestabstand unterschreitet.

In dem Bus-System 2 ist eine Parametrierung der vier Entfernungs-Sensoren 3-i erforderlich, damit diese eindeutige Bus-Adressen aufweisen und ihre Messsignale Si nachfolgend zugeordnet werden können. Erfindungsgemäß ist eine dynamische Parametrierung nach Einbau des gesamten Rückraum-Überwachungssystems 2 möglich, wobei das Rückraum-Überwachungssystem 2 auch durch Einbau weiterer Entfernungs-Sensoren 3-i erweitert und nachfolgend neu parametriert werden kann.

Der Befehlssatz des Bus-Systems umfasst erfindungsgemäß folgende, vom Bus-Master 6 auszugebende Kommandos:
ein Status-Anfrage-Kommando K1: getStatus (Adresse),
ein unbedingtes Adressierkommando K2: setAdresse (alte Adresse, neue Adresse),
ein bedingtes Adressierkommando K3: setAdresseFallsTransducerFehlerAktiv (alte Adresse, neue Adresse).

Auf das unbedingte Adressierkommando K2 des Bus-Masters 6 erfolgt keine Antwort der Entfernungs-Sensoren 3-i, da es ansonsten auf dem LIN-Bus 7 zu einem ungültigen Zustand kommen würde, falls mehrere Entfernungs-Sensoren 3-i gleichzeitig auf eine andere Adresse umparametriert werden.

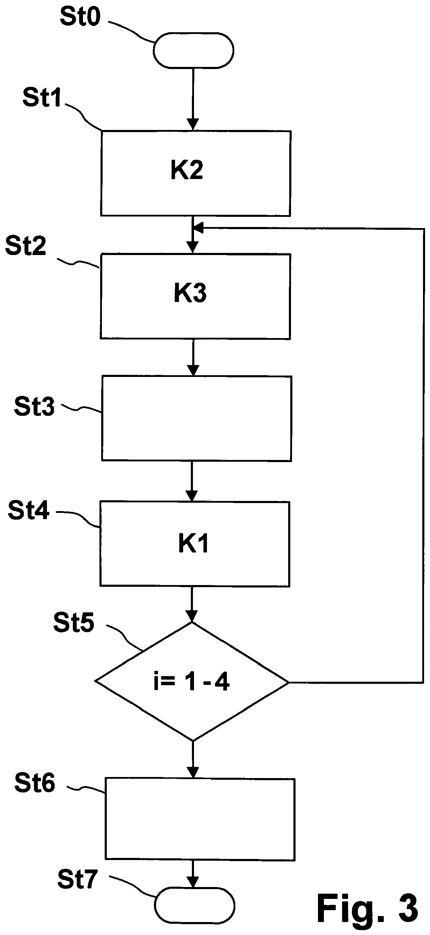

Im folgenden wird das erfindungsgemäße Verfahren zum Parametrieren der Abstandssensoren 3-i durch den Bus-Master 6 mit Bezug zu dem Flussdiagramm der Fig. 3 beschrieben:
Der Start erfolgt im Schritt St0. Hierzu kann ein Benutzer z. B. eine tragbare Recheneinrichtung 16 mit einem Monitor 17 an den Bus-Master 6 anschließen und ein Programm zu Parametrierung starten.

Optional kann ein Schritt St1 durchgeführt werden, um die aktuellen Bus-Adressen zurückzusetzen. Falls sich das Rückraum-Überwachungssystem 2 nicht im Auslieferungszustand befindet, lassen sich durch den Schritt St1 sämtliche Entfernungs-Sensoren 3-i zurück auf ihre Basisadresse a0 setzen, indem der LIN-Master 6 für alle gültigen Bus-Adressen das unbedingte Adressierkommando setAdresse (alte Adresse, Basisadresse) absetzt. Somit können entsprechende Kommandos K2 z. B. für die vier Bus-Adressen a1, a2, a3, a4 ausgegeben werden, um ggf. vorhandene Adressierungen bei den Entfernungs-Sensoren 3-i auf die Basisadresse a0 zurückzusetzen. Hierbei antworten die Sensoren 3-i nicht.

Der Schritt S1 kann grundsätzlich auch entfallen.

In der Schleife der Schritte St2 bis St 5 erfolgt dann sukzessive die Parametrierung der Abstands-Sensoren 3-i für i= 1 bis 4.

Zunächst wird der erste Entfernungs-Sensor 3-1, d. h. mit der Adresse a1, parametriert. Hierzu wird der Benutzer in Schritt St2 über den Monitor 17 oder in akustischer Ausgabe aufgefordert, den Entfernungs-Sensor 3-1 abzudecken, bis die Umparametrierung bestätigt ist. Gleichzeitig (oder auch vorher oder etwas später) gibt der Bus-Master 6 fortlaufend das bedingte Adressierkommando K3 als setAdresseFallsTransducerFehlerAktiv (a0, a1) auf den LIN-Bus 7 aus, das von sämtlichen Sensoren 3-i empfangen wird, da sie die Basisadresse a0 aufweisen. Der Zustand der aktiven Parametrierung kann dem Benutzer nicht nur über den Monitor 17, sondern auch durch Ansteuerung von z. B. Positionslampen 18 angezeigt werden, z. B. durch Blinken der Positionslampen 18 während der Parametrierung. Die Positionslampen 18 können hierbei in das LIN-Bussystem eingebunden sein, oder von dem Bus-Master 6 direkt oder indirekt über den CAN-Bus 14 angesteuert werden.

Sobald der vom Benutzer berührte Entfernungs-Sensor 3-1 bzw. dessen Steuereinrichtung 11 in Schritt St3 aus dem analogen Messsignal S9 den Transducer-Fehler erkennt, ist für ihn die Bedingung FallsTransducer-FehlerAktiv erfüllt, so dass er sich die neue Adresse a1 zuweist. Auch die anderen Entfernungs-Sensoren 3- 2, 3-3 und 3-4 empfangen das Adressierkommando setAdresseFallsTransducerFehlerAktiv (a0,a1), reagieren hierauf jedoch nicht, da die Bedingung "TransducerFehlerAktiv" nicht erfüllt ist.

In Schritt St4 fragt der Bus-Master 6 nachfolgend mit einem Status-Anfrage-Kommando K1 getStatus (a1) nach der Bus-Adresse a1, woraufhin sich der Sensor 3-1 meldet, so dass der Bus-Master 6 erkennt, dass die erste Umparametrierung für i = 1 erfolgt ist. Dies signalisiert der Bus-Master 6 vorzugsweise ergänzend dem Benutzer, z. B. auf dem Monitor 17 und ergänzend durch Änderung des Blinksignals der Positionslampen 18, z. B. durch Beendigung des Blinkens oder durch Dauerleuchten.

Nachfolgend wird in dem Entscheidungsschritt St5 die Schleife vor den Schritt S2 zurücksetzt und mit i = 2 fortführt, so dass in Schritt S2 nachfolgend die Aufforderung an den Benutzer ausgegeben wird, den zweiten Sensor 3-2 zu bedecken, usw. (In Fig. 3 kann die Darstellung der Schleife auch anders als mit dem Entscheidungsschritt St5 erfolgen.)

Sobald mit i = 4 die Schleife vollständig durchlaufen ist, wird das Verfahren in Schritt St6 beendet, wozu z. B. wiederum eine entsprechende Ausgabe auf dem Monitor 17 und gegebenenfalls eine Anzeige über die Positionsleuchten, z. B. durch Beendigung des Blinksignals erfolgt. Das Rückraum-Überwachungssystem 2 ist somit vollständig parametriert.

Schritt St1 ist insbesondere auch sinnvoll, falls nicht sämtliche Entfernungs-Sensoren 3-i im Auslieferungszustand auf der Basisadresse a0 sind. Sind z. B. die Entfernungs-Sensoren 3-1, 3-2 und 3-3 im Auslieferungszustand, d. h. mit Basisadresse a0, und der vierte Entfernungs-Sensor 3-4 auf die Adresse a2 gesetzt, erfolgen somit die Schritte:
Schritt St1: Der vierte Entfernungs-Sensor 3-4 wechselt auf die Basisadresse a0;
erster Parametrierungsschritt: der Entfernungs-Sensor 3-1 wird von a0 auf a1 parametriert,
zweiter Parametrierungsschritt: der zweite Entfernungs-Sensor 3-2 wird von a0 auf a2 parametriert,
dritter Parametrierungsschritt: der dritte Entfernungs-Sensor 3-3 wird von a0 auf a3 parametriert,
vierter Parametrierungsschritt: der vierte Entfernungs-Sensor 3-4 wird von a0 auf a4 parametriert.

Gemäß einer alternativen Ausführungsform kann auch lediglich ein bedingte Adressierkommando K4 vorgesehen sein:
K4: setAdresseOnExternalEvent (Zieladresse)

Dieses bedingte Adressierkommando K4 empfangen nun alle Entfernungs-Sensoren 3-i, wobei nur derjenige Entfernungs-Sensor 3-i, der gerade einen aktiven Transducer-Fehler detekiert, auf die angegebene Zieladresse wechselt und sich hierauf beim LIN-Master 6 meldet. Ein derartiges Verfahren ist zwar vom Software-Aufwand etwas reduziert, jedoch fehleranfälliger.

Statt eines Transducer-Fehlers können auch andere äußere Einflüsse, d.h. nicht über den LIN-Bus 7 herbeigeführte Ereignisse, detektiert werden. So ist es z. B. auch möglich, dass die Sensoren 3-i sich selbsttätig in Anhängigkeit eines Messergebnisses unterschiedlich parametrieren, z. B. mit unterschiedlichen Adressen in Abhängigkeit eines detektierten Abstandes bi, für i = 1 bis 4.

## Patentansprüche

1. Verfahren zum Parametrieren eines Sensorsystems (2) für ein Fahrzeug (1), wobei das Sensorsystem (2) mindestens aufweist:
mehrere Sensoren (3-1, 3-2, 3-3, 3-4), die jeweils eine Bus-Anschlusseinrichtung (8) aufweisen und jeweils mindestens ein Messsignal (Si) über ihre Bus-Anschlusseinrichtung (8) ausgeben, und
einen Bus-Master (6),
wobei der Bus-Master (6) und die mehreren Sensoren (3-1, 3-2, 3-3, 3-4) ein Bus-System (2) bilden,
wobei die Sensoren (3-1, 3-2, 3-3, 3-4) durch den Bus-Master (6) parametrierbar sind unter Zuweisung ihrer Bus-Adressen in dem Bus-System (2),
wobei die Sensoren (3-1, 3-2, 3-3, 3-4) jeweils in Abhängigkeit der Detektion eines äußeren Einflusses parametrierbar sind, wobei der äußere Einfluss ein Fehler-Zustand eines sensitiven Elementes (9) des Sensors (3-1, 3-2, 3-3, 3-4) ist oder hervorruft, der durch einen Benutzer durch Abdecken des Sensors (3-1, 3-2, 3-3, 3-4) erzeugbar ist, bei dem für die zu vergebenden Bus-Adressen iterativ mindestens folgende Schritte für jeweils eine Bus-Adresse durchgeführt werden:
- Ausgabe eines Aufforderungs-Signals an den Benutzer zum Erzeugen eines äußeren Einflusses auf den mit der Bus-Adresse zu adressierenden Sensor (3-1, 3-2, 3-3, 3-4), z. B. durch Bedecken des Sensors (3-1, 3-2, 3-3, 3-4) (St2),
- Ausgabe bedingter Adressierkommandos (K3) durch den Bus-Master (6) auf den Bus (7), wobei die bedingten Adressierkommandos (K3) die Bus-Adresse enthalten,
- Wenn der zu adressierende Sensor (3-1, 3-2, 3-3, 3-4) den äußeren Einfluss detektiert und die bedingten Adressierkommandos aufnimmt, Übernahme der angegebenen neuen Bus-Adresse (St3).

2. Verfahren nach Anspruch 1, **dadurch gekennzeichnet, dass** der Bus-Master (6) nach Ausgabe eines bedingten Adressierkommandos (K3) mit einer Bus-Adresse nachfolgend ein Status-Anfrage-Kommando (K1) zu der Bus-Adresse ausgibt und der adressierte Sensor (3-1, 3-2, 3-3, 3-4), der das bedingte Adressierkommando (K3) aufgenommen und die Bus-Adresse übernommen hat, sich über den Bus (7) bei dem Bus-Master (6) meldet. (St4)

3. Verfahren nach Anspruch 1 oder 2, **dadurch gekennzeichnet, dass** in einem ersten Schritt (St1) der Bus-Master (6) unbedingte Adressierkommandos (K2) ausgibt und hierdurch sämtliche Bus-Adressen der Sensoren (3-1, 3-2, 3-3, 3-4) auf eine Basisadresse setzt.

## Claims

1. Method for parameterizing a sensor system (2) for a vehicle (1), wherein the sensor system (2) at least has:
a plurality of sensors (3-1, 3-2, 3-3, 3-4) which each have a bus connection device (8) and each output at least one measurement signal (Si) via their bus connection device (8), and
a bus master (6),
wherein the bus master (6) and the plurality of sensors (3-1, 3-2, 3-3, 3-4) form a bus system (2),
wherein the sensors (3-1, 3-2, 3-3, 3-4) can be parameterized by the bus master (6) with allocation of their bus addresses in the bus system (2),
wherein the sensors (3-1, 3-2, 3-3, 3-4) can each be parameterized on the basis of the detection of an external influence, wherein the external influence is or causes a fault state of a sensitive element (9) of the sensor (3-1, 3-2, 3-3, 3-4) which can be produced by a user by covering the sensor (3-1, 3-2, 3-3, 3-4),
in which, for the bus addresses to be allocated, at least the following steps are iteratively carried out for one bus address in each case:
- outputting a request signal to the user to produce an external influence on the sensor (3-1, 3-2, 3-3, 3-4) to be addressed using the bus address, for example by covering the sensor (3-1, 3-2, 3-3, 3-4) (St2),
- outputting conditional addressing commands (K3) to the bus (7) by means of the bus master (6), wherein the conditional addressing commands (K3) contain the bus address,
- transferring the stated new bus address (St3) if the sensor (3-1, 3-2, 3-3, 3-4) to be addressed detects the external influence and receives the conditional addressing commands.

2. Method according to Claim 1, **characterized in that**, after outputting a conditional addressing command (K3) containing a bus address, the bus master (6) then outputs a status request command (K1) for the bus address, and the addressed sensor (3-1, 3-2, 3-3, 3-4) which has received the conditional addressing command (K3) and has transferred the bus address registers with the bus master (6) via the bus (7) (St4).

3. Method according to Claim 1 or 2, **characterized in that** the bus master (6) outputs unconditional addressing commands (K2) in a first step (St1) and, as a result, sets all bus addresses of the sensors (3-1, 3-2, 3-3, 3-4) to a base address.

## Revendications

1. Procédé de paramétrage d'un système de détection (2) pour un véhicule (1), le système de détection (2) possédant au moins :
plusieurs capteurs (3-1, 3-2, 3-3, 3-4) qui possèdent respectivement un dispositif de connexion de bus (8) et délivrent respectivement au moins un signal de mesure (Si) par le biais de leur dispositif de connexion de bus (8), et
un maître de bus (6),
le maître de bus (6) et les plusieurs capteurs (3-1, 3-2, 3-3, 3-4) formant un système de bus (2),
les capteurs (3-1, 3-2, 3-3, 3-4) pouvant être paramétrés par le maître de bus (6) en attribuant leurs adresses de bus dans le système de bus (2),
les capteurs (3-1, 3-2, 3-3, 3-4) pouvant être paramétrés respectivement en fonction de la détection d'une influence externe, l'influence externe étant ou provoquant un état de défaut d'un élément sensible (9) du capteur (3-1, 3-2, 3-3, 3-4), lequel peut être généré par un utilisateur en recouvrant le capteur (3-1, 3-2, 3-3, 3-4),
procédé avec lequel, pour les adresses de bus à attribuer, au moins les étapes suivantes sont exécutées respectivement pour une adresse de bus :
- délivrance d'un signal d'invitation à l'utilisateur en vue de générer une influence externe sur le capteur (3-1, 3-2, 3-3, 3-4) auquel s'adresser avec l'adresse de bus, par exemple en recouvrant le capteur (3-1, 3-2, 3-3, 3-4) (St2),
- délivrance d'instructions d'adressage conditionnelles (K3) par le maître de bus (6) sur le bus (7), les instructions d'adressage conditionnelles (K3) contenant l'adresse de bus,
- lorsque le capteur (3-1, 3-2, 3-3, 3-4) auquel s'adresser détecte l'influence externe et accueille les instructions d'adressage conditionnelles, prise en charge de la nouvelle adresse de bus indiquée (St3).

2. Procédé selon la revendication 1, **caractérisé en ce que** le maître de bus (6), après la délivrance d'une instruction d'adressage conditionnelle (K3) avec une adresse de bus, délivre ensuite une instruction d'interrogation d'état (K1) à l'adresse de bus et le capteur (3-1, 3-2, 3-3, 3-4) destinataire de l'adressage, lequel a accueilli l'instruction d'adressage conditionnelle (K3) et pris en charge l'adresse de bus, se signale auprès du maître de bus (6) par le biais du bus (7) (St4).

3. Procédé selon la revendication 1 ou 2, **caractérisé en ce que** dans une première étape (ST1), le maître de bus (6) délivre des instructions d'adressage inconditionnelles (K2) et fixe ainsi toutes les adresses de bus des capteurs (3-1, 3-2, 3-3, 3-4) à une adresse de base.
